# EUROPÄISCHE PATENTSCHRIFT

(11) **EP 1 013 925 B1**
(45) Veröffentlichungstag und Bekanntmachung des Hinweises auf die Patenterteilung: **14.01.2004**
(21) Anmeldenummer: 99124712.3
(22) Anmeldetag: 11.12.1999
(51) Int. Cl.: F03D 7/04, F03D 7/02

(54) **Verfahren zum Betreiben einer Offshore-Windenergieanlage**
Method of control of an offshore wind turbine
Procédé de commande d'une éolienne marine

(30) Priorität: 24.12.1998 DE 19860215
(43) Veröffentlichungstag der Anmeldung: 28.06.2000
(73) Patentinhaber: aerodyn Engineering GmbH, 24768 Rendsburg (DE)
(72) Erfinder: Siegfriedsen, Sönke, 25840 Friedrichstadt (DE)
(74) Vertreter: Biehl, Christian, Dipl.-Phys.

(56) Entgegenhaltungen:
- US-A- 4 297 076
- US-A- 4 339 666
- NEDELTCHEV N M ET AL: "SEA STATE REMOTE SENSING MEASUREMENTS WITH A SHIP-MOUNTED LASER PROFILOMETER" REMOTE SENSING: GLOBAL MONITORING FOR EARTH MANAGEMENT. ESPOO, FINLAND, JUNE 3 - 6, 1991, PROCEEDINGS OF THE ANNUAL GEOSCIENCE AND REMOTE SENSING SYMPOSIUM. (IGARSS), NEW YORK, IEEE, US, Bd. 3 SYMP. 11, 3. Juni 1991 (1991-06-03), Seiten 1311-1314, XP000470477
- DATABASE COMPENDEX [Online] ENGINEERING INFORMATION, INC., NEW YORK, NY, US; CHRONIS GEORGE TH ET AL: "POSEIDON: Marine environmental, monitoring, forecasting and information system for Greek waters" Database accession no. EIX99194599084 XP002215135 & PROCEEDINGS OF THE 1998 OCEANS CONFERENCE. PART 3 (OF 3);NICE, FR SEP 28-OCT 1 1998, Bd. 3, 1998, Seiten 1529-1530, Oceans Conf Rec IEEE;Oceans Conference Record (IEEE) 1998 IEEE, Piscataway, NJ, USA
- HAU E.: "WINDKRAFTANLAGEN" 1996 , SPRINGER VERLAG , BERLIN XP002215132 241430 * Seite 153 - Seite 158 * * Seite 527 - Seite 528 *

## Beschreibung

Die Erfindung betrifft ein Verfahren zum Betreiben einer Offshore-Windenergieanlage, die mit einer Einrichtung zum Eingriff in die einwirkenden Windlasten auf den Rotor versehen ist.

Dieser Eingriff kann zum Beispiel durch Veränderung des Anstellwinkels der Rotorblätter erfolgen, wobei beide Richtungen denkbar sind, entweder in die 'Stall-Richtung' (Vergrößern des Anstellwinkels), den Einstellwinkel so zu verändern, daß der Rotor gebremst wird, oder in 'Pitch-Richtung' (Verringern des Anstellwinkels). Ein anderweitiger Eingriff, der den Rotor in seiner Gesamtbewegung bremst, ist auch denkbar, ebenso ein Abschalten bei einer Passiv-Stall-Anlage (u.U. mit zusätzlichem Betätigen einer Bremse).

Bei Offshore-Windenergieanlagen wird, wie bei anderen Windenergieanlagen auch, das Auftreten starker Windstöße durch das entsprechende Aus-dem-Wind-Nehmen der Rotorblätter der Windkraftanlage kompensiert. Auch dauerhaft zu hohe Windstärken können so kompensiert werden und so nicht zu einer unkontrolliert schnellen Bewegung des Rotors führen.

Insbesondere die Gründungen von Offshore-Windenergieanlagen im Meeresboden unterliegen nun neben Eisgangsund Strömungslasten im wesentlichen auch Belastungen aus den Wind- und Wellenkräften. Dabei wird vor allem das Gründungsbauteil entsprechend einem kombinierten Auftreten von maximalen Windbelastungen im Betrieb und möglichen maximalen Wellenbelastungen dimensioniert werden.

Die Häufigkeit einer gewissen Belastung für die Wind- und Wellenbelastung unterliegt jeweils einer statistischen Verteilung. Die maximale Belastung für das Bauwerk ergibt sich für den Fall der Überlagerung der beiden Wahrscheinlichkeitsfunktionen zum selben Zeitpunkt.

Die Erfindung hat sich zur Aufgabe gestellt, die statistisch maximal auftretende Kombinationsbelastung aus Wind- und Wellenlasten durch die Erfassung der lasterzeugenden Parameter und einer entsprechenden lastvermindernden Einwirkung für den Zeitraum auf den Rotor der Windenergieanlage vorzunehmen, so daß hierdurch die Bauteilkosten, vor allem für das Gründungsbauteil gemindert werden können.

Erfindungsgemäß wird dies dadurch erreicht, daß durch die permanente Bestimmung der Wellenhöhen und der Windgeschwindigkeit bzw. den daraus resultierenden Belastungsgrößen, die äußeren Einwirkungen auf die Windenergieanlage erfaßt werden.

Aufgrund der berechneten Mittelwerte und den bekannten statistischen Häufigkeitsverteilungen der Lastgrößen kann in Abhängigkeit der gegebenen Situation die Windbelastung der Windenergieanlage aktiv vermindert werden. Dies geschieht insbesondere bei sogenannten 'Stall-Anlagen' durch Abschaltung der Anlage und bei sog. 'Pitch-Anlagen' durch Verminderung der Leistung mit Hilfe des Verstellens der Rotorblätter. Ein Ausfahren von Blattspitzen oder anderen zum Vermindern der Lasten vorgesehen Einrichtungen ist weiter möglich.

Diese Maßnahmen führen dazu, daß die resultierende Gesamtbelastung der Anlage die Dimensionierungslasten nicht überschreitet. Die Gesamtbaukosten der Anlage können somit ohne nennenswerte Energieverluste deutlich gesenkt werden.

Vorteilhafterweise wird dabei ein Fernabtastverfahren die Wellen schon in einiger Entfernung von den Windkraftanlagen abtasten, um der Einrichtung eine ausreichende Zeitspanne zur Verfügung zu stellen in der die Beeinflussung der Windlast erfolgen kann.

Ein Laser-Abtastverfahren könnte beispielsweise auf der Beleuchtung der Welle mit Laser und Erfassung der Reflexion bestehen, oder es könnten um die Windenergieanlage herum Schwimmer oder unter Wasser Druckmeßsonden angeordnet sein.

Insbesondere ist vorteilhaft, daß das Fernabtastverfahren dadurch windrichtungsabhängig abtastet, daß es an der Gondel der Windkraftanlage befestigt in Windrichtung abtastet.

Weiter könnte die Geschwindigkeit der sich auf die Windenergieanlage zu bewegenden Welle rechnerisch aus einer Mehrzahl von den einzelnen Anlagen eines Parks von miteinander vernetzten Anlagen zugehörigen Einrichtungen zum Erfassen der Höhe einer sich auf die Windenergieanlage zu bewegenden Welle ermittelt werden.

Insbesondere, wenn über die Zeit ermittelte Werte der Wind- und Wellenlast einer statistischen Auswertung unterworfen werden und eine derart ermittelte Wahrscheinlichkeit des Erreichens der Grenzlast zur Entscheidung über das Bewirken des Eingriffs herangezogen wird, können alle denkbaren Arten eines Eingriffs zur Anwendung kommen.

Weitere Vorteile der Erfindung ergeben sich aus nachfolgender Beschreibung eines bevorzugten Ausführungsbeispiels der Erfindung. Dabei zeigt:
- Fig. 1: schematische Darstellung einer Windkraftanlage mit den auf sie wirkenden Wind- und Wellenlasten, und
- Fig. 2: eine schematische Darstellung einer Meßrichtung eines an der Gondel befestigten Meßsystems.

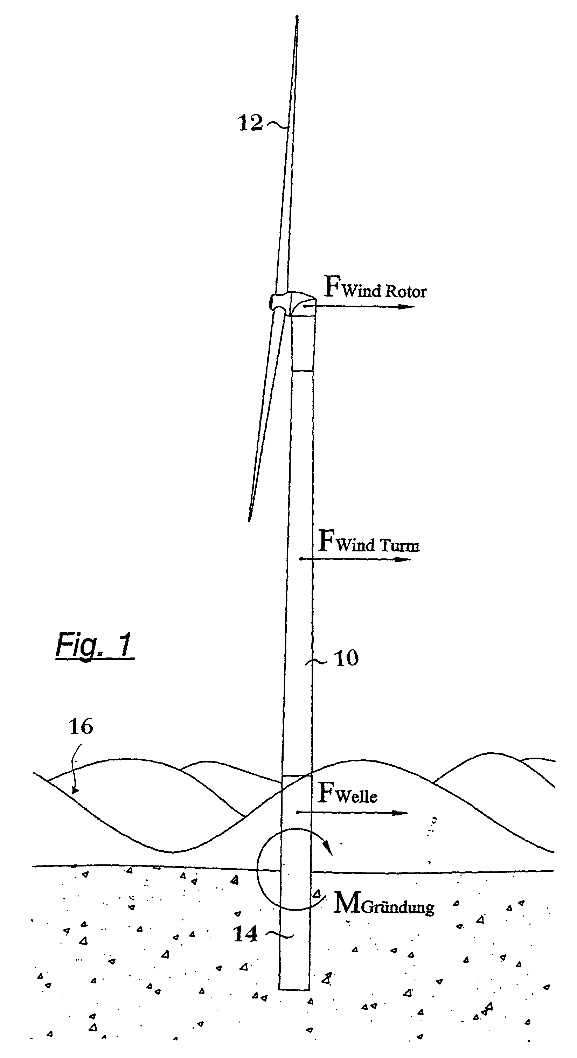

Die in der Fig. 1 wiedergegebene Windbelastung wird durch die Geschwindigkeit der Luftströmung und den Widerstandsbeiwert des Turmes verursacht, die die auf dem Turm von außen einwirkende Strömungskraft bewirken. Diese Kraftwirkung kann nicht beeinflußt werden.

Die Kraftwirkung der Wellen auf die Struktur ist ebenfalls nicht zu beeinflussen und stark von der Wellenhöhe abhängig. Denkbar ist jedoch auch, eine direkte Erfassung der auftreffenden Kraft der Wellen vorzusehen. Ebenso ist es bei der Erfassung der Stärke des Windes möglich, außer der üblicherweise erfaßten Windgeschwindigkeit noch die Dichte der Luft (insbesondere die Luftfeuchtigkeit) zu erfassen.

Die Lasten des Rotors, die von der Windgeschwindigkeit abhängig sind, können nun durch die aktive Beeinflussung des Rotors vermindert werden, um so das durch die drei Lastgrößen zusammen erzeugte resultierende Biegemoment an der Einspannung des Gründungsteils im Meeresboden zu reduzieren.

Durch die Reduzierung der Rotorlast kann das Biegemoment aufgrund des besonders großen Hebelarms signifikant beeinflußt werden, so daß die Gesamtlastgröße an der Einspannung auch bei einer hohen Wellenlast vorgebene Maximalhöhen nicht überschreiten wird.

Die auf den Turm wirkende Windkraft ist ca. im Flächenschwerpunkt des Turms 10 durch einen Pfeil mit der Beschriftung F_{Wind Turm} dargestellt, während die auf den Rotor wirkende Kraft mit einem Pfeil und der Beschriftung F_{Wind} _{Rotor} an dem Ende des Turms wirkt. Die auf den aus dem Meeresboden herausragenden unteren Abschnitt des Turmes aufkommende Kraft der Wellen 16 wird durch ein in Meeresspiegelhöhe angeordneten Pfeil mit der Beschriftung F_{Welle} symbolisiert und das Biegemoment im Gründungsteil durch einen Bogenpfeil mit der Beschriftung M_{Gründung}.

Die zu einem bestimmten Zeitraum herrschenden Wellenhöhen können über die Zeit erfaßt werden, wobei bei einem gewissen Überschreiten eines Grenzwertes für die kommende Zeit der Rotor solange beeinflußt wird, bis die Wellen wieder im Mittel insgesamt unter dem Grenzwert liegen. Derartig langfristige Beeinflußung des Rotors ist leicht zu bewerkstelligen.

Schwieriger wird es, wenn auf einzelne Wellen reagiert werden soll, dann müßte eine sehr schnelle Beeinflussung des Rotors (z.B. durch eine Pitch-Anlage) erfolgen und eine in Windrichtung gerichtete Erfassung der Wellen, die aber, beispielsweise durch eine Lasermeßtechnik, insbesondere eine solche, bei der das Meßsystem bereits auf der Gondel der Windkraftanlage angeordnet ist und entsprechend immer in Windrichtung ausgerichtet ist, erreicht werden.

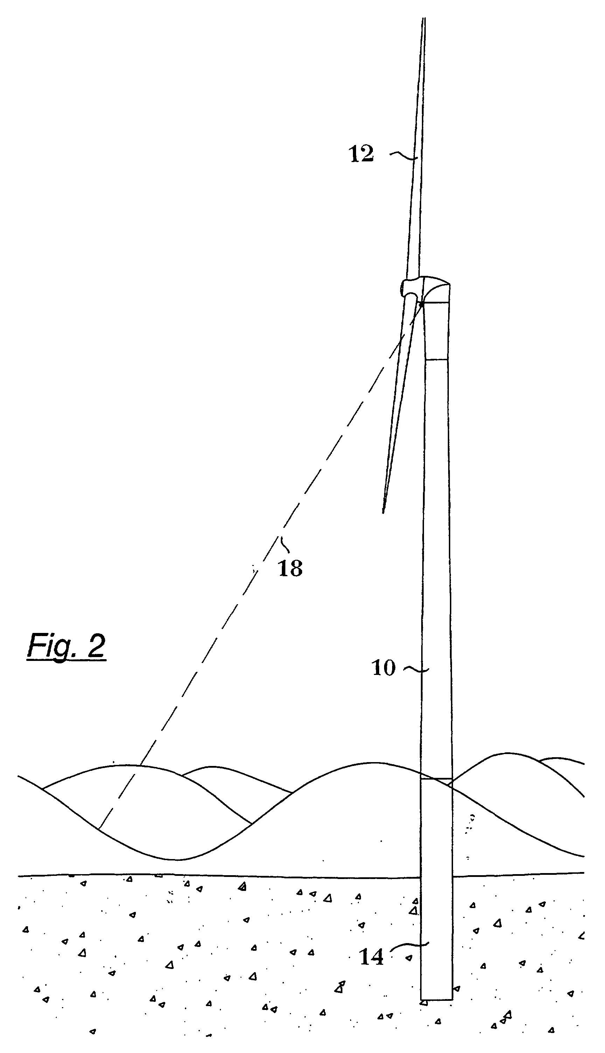

Ein derartiges Meßsystem ist in der Fig. 2 dargestellt, in der eine beispielhafte Meßrichtung 18 in die Richtung, aus der der Wind kommt, verdeutlicht ist. Die Messungen werden nur jeweils zwischen den umlaufenden Rotorblättern durchgeführt, um keine Verfälschung der Signale zu erhalten.

Durch die statistische Auswertung der Wellenhöhen und der daraus abzuleitenden Wahrscheinlichkeit der Wellenlastüberschreitung kann die Steuerung die Lasten des Rotors über längere Zeiträume, unter Umständen jedoch auch aktuell kurzzeitig beeinflussen. Bei einem feldartigen Aufbau mehrerer Windenergieanlagen nebeneinander ist auch denkbar, Schwimmer zur Erfassung der sich bewegenden Wellen 16 oder auch nur auf dem Meeresboden angeordnete Druckmeßsensoren vorzusehen.

## Patentansprüche

1. Verfahren zum Betreiben einer Offshore-Windenergieanlage, die mit einer Einrichtung zum Eingriff in die einwirkenden Windlasten auf den Rotor versehen ist,
**gekennzeichnet durch**
- Erfassen der Stärke des auf die Rotorblätter einwirkenden Windes,
- Erfassen der Höhe von sich auf die Windenergieanlage zu bewegenden Wellen,
- Berechnen der sich aus der Windlast und der Wellenlast ergebenden, von der Gründung aufzunehmenden Gesamtlast, und
- Bewirken eines lastvermindernden Eingriffs auf den Rotor, dann, wenn die bei Auftreffen der Welle auf den Turm zu erwartende Gesamtlast eine Grenzlast überschreitet.

2. Verfahren nach Anspruch 1, **dadurch gekennzeichnet, daß** das Bewirken des lastvermindernden Eingriffs auf den Rotor durch Ändern der Anstellwinkel der Rotorblätter erfolgt, dann wenn die bei Auftreffen der Welle auf den Turm zu erwartende Gesamtlast eine Grenzlast überschreitet.

3. Verfahren nach einem der vorangehenden Ansprüche, **dadurch gekennzeichnet, daß** ein lasergestütztes Fernabtastverfahren zur Erfassung der Wellenhöhen vorgesehen ist.

4. Verfahren nach einem der vorangehenden Ansprüche, **dadurch gekennzeichnet, daß** eine Einrichtung zum Fernabtasten an der Gondel der Windenergieanlage mitgeführt ist.

5. Verfahren nach einem der vorangehenden Ansprüche, **dadurch gekennzeichnet, daß** die Höhe der sich auf die Windenergieanlage zu bewegenden Welle durch ein Schwimmersystem ermittelt wird.

6. Verfahren nach einem der vorangehenden Ansprüche, **dadurch gekennzeichnet, daß** die Geschwindigkeit der sich auf die Windenergieanlage zu bewegenden Welle rechnerisch aus einer Mehrzahl von den einzelnen Anlagen eines Parks von miteinander vernetzten Anlagen zugehörigen Einrichtungen zum Erfassen der Höhe einer sich auf die Windenergieanlage zu bewegenden Welle ermittelt wird.

7. Verfahren nach einem der vorangehenden Ansprüche, **dadurch gekennzeichnet, daß** Blattspitzen des Rotors zur Verminderung der Windlasten ausgefahren werden.

8. Verfahren nach einem der vorangehenden Ansprüche, **dadurch gekennzeichnet, daß** über die Zeit ermittelte Werte der Wind- und Wellenlast einem statistischen Auswerteverfahren unterworfen werden und die so ermittelte Wahrscheinlichkeit des Erreichens der Grenzlast zur Entscheidung über das Bewirken des Eingriffs herangezogen wird.

## Claims

1. Method for operating an offshore wind power plant, which is provided with a device for intervention in the wind loads acting on the rotor, **characterized by**
- determining the strength of the wind acting on the rotor blades,
- determining the height of the waves moving towards the wind power plant,
- calculating the total load to be absorbed by the foundation and resulting from the wind load and the wave load and
- bringing about a load-reducing intervention on the rotor if the total load expected when the wave strikes the tower exceeds a maximum load.

2. Method according to claim 1, **characterized in that** the bringing about of the load-reducing intervention on the rotor takes place by modifying the blade angle of the rotor blades when the total load expected when the wave strikes the tower exceeds a maximum load.

3. Method according to one of the preceding claims, **characterized in that** a laser-assisted remote sensing method is used for determining the wave heights.

4. Method according to one of the preceding claims, **characterized in that** a remote sensing device is carried on the wind power plant gondola.

5. Method according to one of the preceding claims, **characterized in that** the height of the wave moving towards the wind power plant is determined by a float system.

6. Method according to one of the preceding claims, **characterized in that** the speed of the wave moving towards the wind power plant is determined mathematically from a plurality of devices associated with the individual plants of a park of interconnected plants for determining the height of a wave moving towards the wind power plant.

7. Method according to one of the preceding claims, **characterized in that** the blade tips of the rotor are extended for reducing wind loads.

8. Method according to one of the preceding claims, **characterized in that** the wind and wave load values determined over a period of time are subject to a statistical evaluation process and the thus determined probability of reaching the maximum load is used for deciding on whether to bring about an intervention.

## Revendications

1. Procédé de commande d'une éolienne marine qui est pourvue d'un dispositif pour intervenir sur les charges dues au vent qui agissent sur le rotor,
**caractérisé par**
- détection de la force du vent agissant sur les pales de rotor,
- détection de la hauteur des vagues qui se déplacent en direction de l'éolienne,
- calcul de la charge totale, résultant de la charge due au vent et de la charge due aux vagues, qui doit être absorbée par le soubassement, et
- production sur le rotor d'une intervention réduisant la charge lorsque la charge totale attendue lors de l'impact de la vague sur le mât dépasse une charge limite.

2. Procédé selon la revendication 1, **caractérisé en ce que** la production sur le rotor de l'intervention réduisant la charge s'effectue en modifiant l'angle d'attaque des pales de rotor lorsque la charge totale attendue lors de l'impact de la vague sur le mât dépasse une charge limite.

3. Procédé selon l'une des revendications précédentes, **caractérisé en ce qu'**il est prévu pour détecter les hauteurs des vagues un procédé de balayage à distance assisté par laser.

4. Procédé selon l'une des revendications précédentes, **caractérisé en ce qu'**un dispositif pour le balayage à distance est embarqué sur la nacelle de l'éolienne.

5. Procédé selon l'une des revendications précédentes, **caractérisé en ce que** la hauteur de la vague qui se déplace en direction de l'éolienne est déterminée par un système de flotteurs.

6. Procédé selon l'une des revendications précédentes, **caractérisé en ce que** la vitesse de la vague qui se déplace en direction de l'éolienne est déterminée par le calcul à partir d'une pluralité de dispositifs, destinés à détecter la hauteur d'une vague se déplaçant en direction de l'éolienne, qui sont associés aux éoliennes individuelles d'un parc d'éoliennes mises en réseau.

7. Procédé selon l'une des revendications précédentes, **caractérisé en ce que** des extrémités des pales du rotor sont déployées afin de réduire les charges dues au vent.

8. Procédé selon l'une des revendications précédentes, **caractérisé en ce que** les valeurs, déterminées au fil du temps, de la charge due au vent et de la charge due aux vagues sont soumises à un procédé d'évaluation statistique et la probabilité, ainsi déterminée, d'atteinte de la charge limite est utilisée pour décider de la production de l'intervention.
